# EUROPEAN PATENT APPLICATION

(11) **EP 1 953 097 A2**
(43) Date of publication of application: **06.08.2008**
(21) Application number: 08000549.9
(22) Date of filing: 14.01.2008
(51) Int. Cl.: B65G 41/00

(54) **Continuous loader that can be lifted and tilted**

(30) Priority: 30.01.2007 IT VI20070025
(71) Applicant: Virginio Nastri S.R.L., 36071 Arzignano (Vicenza) (IT)
(72) Inventor: Virginio, Luca, 36071 Arzignano (Vicenza) (IT); Virginio, Marco, 36072 Chiampo (Vicenza) (IT); Virginio, Matteo, 36071 Arzignano (Vicenza) (IT); Virginio, Domenico, 36071 Arzignano (Vicenza) (IT)
(74) Representative: Bettello, Pietro

(57) **Abstract**

The invention concerns a continuous loader of objects, able to lift and tilt, of the type consisting of a conveyer belt (100), mounted on a base (1), usually trailer-mounted; such a base is equipped with devices that adjust the height and inclination of the aforementioned conveyor belt, in order to be able to adapt the apparatus to the different conditions of use. The loader is characterised in that the height adjustment action of the work plane is carried out by using a servo control (20), which is actuated by acting upon a control that is easily accessible to the operator.

## Description

The present finding concerns a device for continuously loading objects that is able to be lifted and tilted, according to the general part of claim 1.

In many industries loaders consisting of a continuous rotary conveyer belt mounted on a base, usually trailer-mounted, equipped with devices that adjust the height and inclination of the working plane of the aforementioned conveyer belt, in order to be able to adapt the apparatus to the different conditions of use.

At the current state of the art, the height and inclination of the conveyer belt are adjusted by acting manually upon specific mechanical members.

An example of this is the continuous rotary conveyer belt loader described in the patent document VI91A000160, in which the inclination of the conveyer belt is obtained by acting upon some bolts, that can slide in specific slits with circular sector, formed on brackets, emerging laterally with respect to the support uprights for said belt, whereas the height adjustment of the above takes place by acting upon a hand wheel with threaded hub, which engages on a threaded shaft mounted centrally on the base and arranged below said belt.

In practice, the lifting/lowering of the conveyor belt thus forces the operator to position himself below the conveyor belt so as to be able to act manually upon the hand wheel; said manoeuvre runs counter to the current strict health and safety regulations and is particularly complex when the apparatus is of substantial size, or else is positioned in spaces that are narrow or difficult to gain access to.

The purpose of the present finding is to make a continuous loader of objects, able to be lifted and tilted, which does not have the drawbacks displayed by similar known products. which does not have the drawbacks displayed by similar known products.

Specifically, the purpose of the present finding is to make a continuous loader of objects, able to lift and tilt, which is easy to manoeuvre in all conditions of use and offers maximum safety for the operator.

Such purposes are accomplished by making a continuous loader, able to lift and tilt, in which the height adjustment action of the loading plane, consisting, for example, of a conveyor belt, is carried out by using a servo control, the actuation system of which can be of the oleodynamic, pneumatic or electromechanical type; said servo control is actuated by acting upon a control, such as a lever, a button or a pedal, all of which are easily accessible to the operator.

The finding shall now be described in greater detail, purely as a non-limiting example, with the help of the attached tables of drawings, where:
- fig. 1 (table I) represents an overall side view of the loader according to the finding;
- figs. 2-4 (table II) represent the three perpendicular views of the support base of the loader according to fig. 1;
- fig. 5 represents the hydraulic scheme of the lifting unit applied to the loader according to fig. 1.

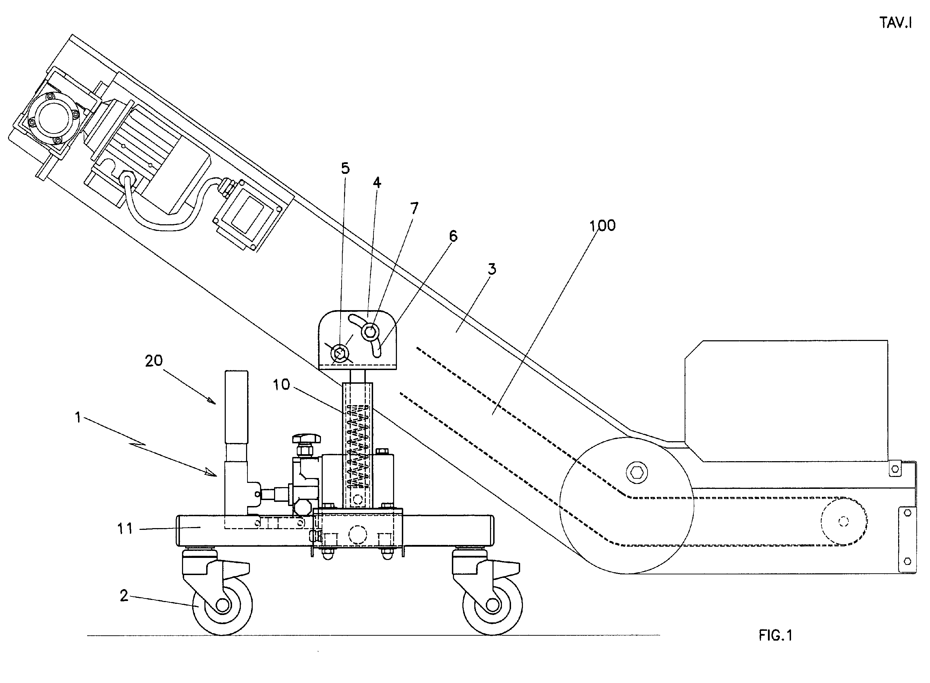

As can be seen in fig. 1, the loader according to the finding comprises a base, wholly indicated with reference numeral 1, mounted on wheels 2, which supports the frame 3 of the conveyor belt 100, through angular side elements 4, equipped with a rotation pin 5 and an oblong slit 6, in which a bolt 7 engages, which precisely gives the desired inclination of the conveyor belt, based upon the processing requirements, according to a *per se* known arrangement.

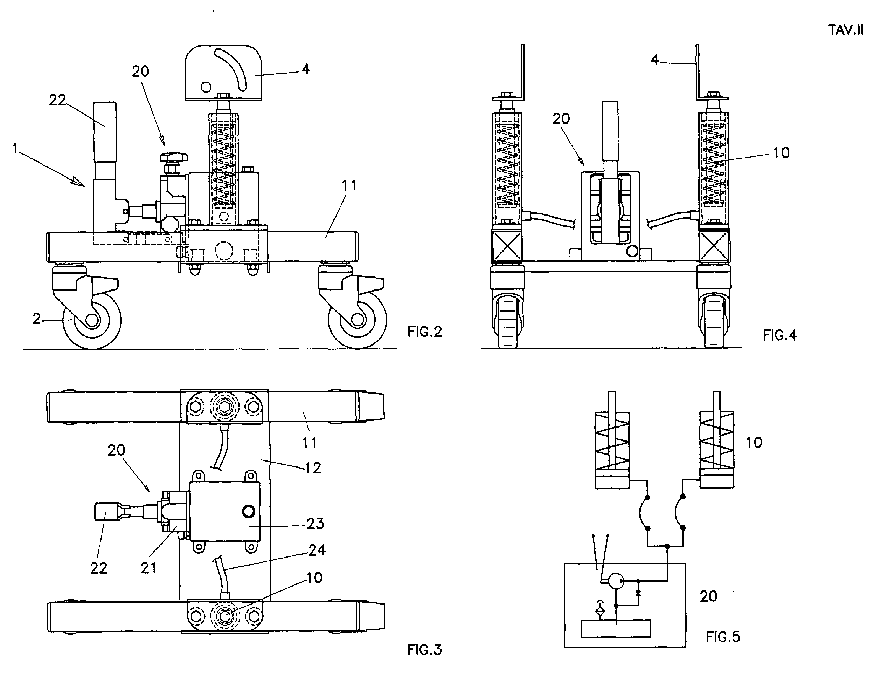

As can be seen in figs. 2-4, the frame 3 is supported through two side uprights, consisting of two oleodynamic cylinders 10 applied to the angular side elements 4 and that rest on the underframe 11 of the base 1.

The actuation of the two oleodynamic cylinders 10 to adjust the height of the frame 3 takes place through a servo control, wholly indicated with reference numeral 20, arranged on a plate 12 of the base 1.

As can be seen in fig. 5, the servo control 20 substantially consists of a pump 21, actuated through a lever 22, which sends the oil from a tank 23, through flexible tubes 24, to the cylinders 10.

The cylinders 10 are advantageously of the single-acting type with a counteracting spring to make it easier for the stem to go back freely.

Of course, other embodiments different to the one described are also possible, according to the components that make up the servo control without for this reason departing from the scope of the following claims.

## Claims

1. CONTINUOUS LOADER OF OBJECTS, ABLE TO LIFT AND TILT, of the type consisting of a conveyer belt (100), mounted on a base (1), usually trailer-mounted, said base being equipped with devices that adjust the height and inclination of the aforementioned conveyor belt, in order to be able to adapt the apparatus to the different conditions of use.
said loader being **characterised in that**
the height adjustment action of the work plane is carried out by using a servo control (20), which is actuated by acting upon a control that is easily accessible to the operator.

2. LOADER, according to claim 1, **characterised in that** the actuation system of the servo control is of the oleodynamic type.

3. LOADER, according to claim 1, **characterised in that** the actuation system of the servo control is of the pneumatic type.

4. LOADER, according to claim 1, **characterised in that** the actuation system of the servo control is of the electromechanical type.

5. LOADER, according to claim 1, of the type comprising a base (1) mounted on wheels (2), which supports the frame (3) through angular side elements (4), equipped with a rotation pin (5) and an oblong slit (6), in which a bolt (7) engages, which gives the desired inclination of the conveyor belt, based upon the processing requirements,
said loader being **characterised in that** the frame (3) is supported through two side uprights, consisting of two oleodynamic cylinders (10) applied to said angular side elements (4) and that rest on the underframe (11) of said base (1).

6. LOADER, according to claim 5, **characterised in that** the actuation of the two oleodynamic cylinders (10) takes place through an oleodynamic servo control (20), arranged on a plate (12) of the base (1).

7. LOADER, according to claim 6, **characterised in that** the servo control (20) consists of a pump (21), actuated through a lever (22), which sends the oil from a tank (23), through flexible tubes (24), to the cylinders (10).

8. LOADER, according to claim 7, **characterised in that** the oleodynamic cylinders (10) are of the single-acting type, with counteracting spring.
